# FASCICULE DE BREVET EUROPEEN

(11) **EP 4 488 179 B1**
(45) Date de publication et mention de la délivrance du brevet: **16.09.2026**
(21) Numéro de dépôt: 24183256.7
(22) Date de dépôt: 20.06.2024
(51) Int. Cl.: B64D 27/40, F01D 21/04, F01D 25/28, F02C 7/20, F02K 3/06

(54) **ENSEMBLE DE PROPULSION COMPRENANT UN SYSTÈME DE SUSPENSION DE LA PARTIE ARRIÈRE DE LA MOTORISATION, AÉRONEF COMPORTANT AU MOINS UN TEL ENSEMBLE DE PROPULSION**
ANTRIEBSANORDNUNG MIT EINEM AUFHÄNGUNGSSYSTEM DES HINTEREN TEILS DES MOTORISIERUNGSVERFAHRENS, LUFTFAHRZEUG MIT MINDESTENS EINER SOLCHEN ANTRIEBSANORDNUNG
PROPULSION ASSEMBLY COMPRISING A SYSTEM FOR SUSPENDING THE REAR PORTION OF THE PROPULSION UNIT, AIRCRAFT COMPRISING AT LEAST ONE SUCH PROPULSION ASSEMBLY

(30) Priorité: 04.07.2023 FR 2307123
(43) Date de publication de la demande: 08.01.2025
(73) Titulaire: AIRBUS OPERATIONS (S.A.S.), 31060 Toulouse (FR)
(72) Inventeur: BERJOT, Michael, 31060 TOULOUSE (FR); LANSIAUX, Rémi, 31060 TOULOUSE (FR); VIGNES, Jean-Baptiste, 31060 TOULOUSE (FR); PARASCHIV, Veronica, 31060 TOULOUSE (FR)
(74) Mandataire: Fantin, Laurent

(56) Documents cités:
- CN-A- 116 280 221
- US-A1- 2021 261 263
- US-B2- 10 144 524
- US-B2- 11 407 518
- US-B2- 8 827 203

## Description

La présente demande se rapporte à un ensemble de propulsion comprenant un système de suspension de la partie arrière de la motorisation ainsi qu'à un aéronef comportant au moins un tel ensemble de propulsion.

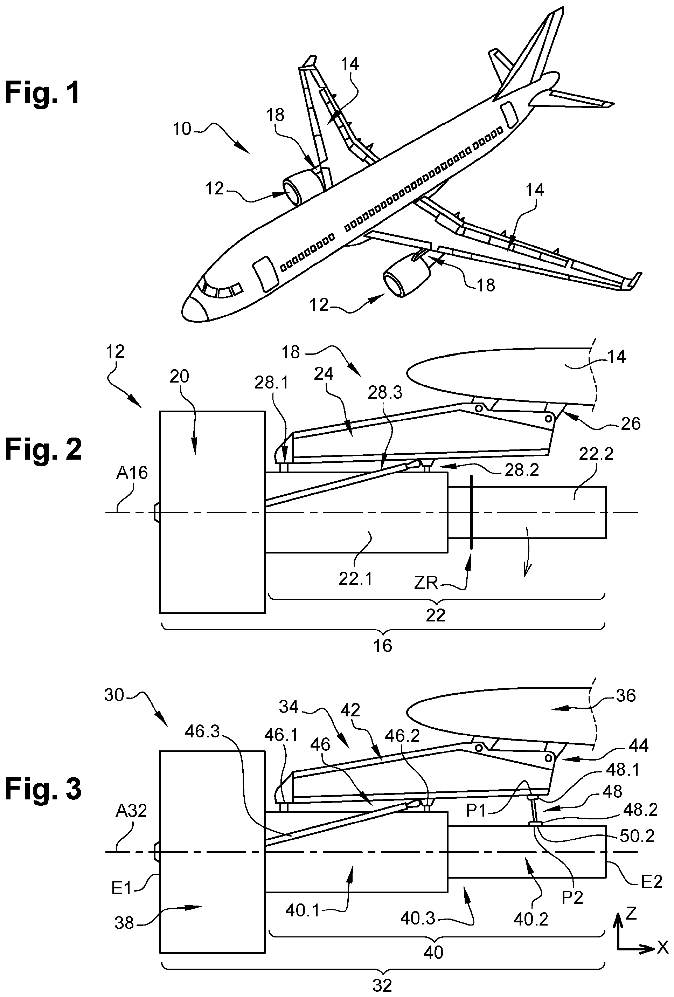

Selon une configuration visible sur les figures 1 et 2, un aéronef 10 comprend plusieurs ensembles de propulsion 12 qui sont positionnés sous la voilure 14 de l'aéronef 10.

Un ensemble de propulsion 12 comprend une motorisation 16, une nacelle (non représentée sur la figure 2) positionnée autour de la motorisation 16 ainsi qu'un mât 18 reliant la motorisation 16 au reste de l'aéronef 10, notamment à la voilure 14.

Pour la suite de la description, une direction longitudinale X est parallèle à l'axe de rotation de la motorisation A16. Un plan transversal est un plan perpendiculaire à l'axe de rotation de la motorisation A16. Une direction transversale et horizontale Y est une direction perpendiculaire à l'axe de rotation de la motorisation A16 et horizontale. Une direction transversale et verticale Z est une direction perpendiculaire à l'axe de rotation de la motorisation A16 et verticale. Un plan médian vertical est un plan vertical contenant l'axe de rotation de la motorisation A16. Les termes avant et arrière font référence au sens d'écoulement du flux d'air dans la motorisation 16, ce dernier s'écoulant de l'avant vers l'arrière.

La motorisation 16 comprend une soufflante 20 ainsi qu'un cœur de réacteur 22 comprenant une partie avant 22.1, intégrant notamment des étages de compression et des chambres de combustion, ainsi qu'une partie arrière 22.2 intégrant notamment des turbines et une tuyère. Le mât 18 comprend une structure primaire 24, sous la forme d'un caisson, qui est reliée à la voilure 14 par une attache-voilure 26 et à la motorisation 16 par une attache-moteur avant 28.1, ainsi qu'une attache-moteur arrière 28.2 et un couple de bielles de poussée 28.3 qui assurent la reprise des efforts de poussée. Plus précisément, les attaches-moteurs avant et arrière 28.1, 28.2 relient la partie avant 22.1 du cœur de réacteur 22 et la structure primaire 24 du mât 18.

En cas d'éclatement d'un disque de turbine, la partie arrière 22.2 du cœur de réacteur 22 peut se séparer de la partie avant 22.1 au niveau d'une zone de rupture ZR et se détacher de l'ensemble de propulsion 12.

CN 116 280 221 A divulgue un ensemble de propulsion selon le préambule de la revendication 1.

La présente invention vise à remédier à tout ou partie des inconvénients de l'art antérieur. A cet effet, l'invention a pour objet un ensemble de propulsion selon la revendication 1.

En cas de défaillance, si la partie arrière du cœur de réacteur se détache de la partie avant, cette partie arrière reste reliée au mât et ne tombe pas.

Selon une autre caractéristique, la partie arrière du cœur de réacteur comprend un carter d'échappement qui présente plusieurs cadres structurels décalés les uns par rapport aux autres selon une direction parallèle à l'axe de rotation de la motorisation, le système de suspension étant relié à un des cadres structurels du carter d'échappement.

Selon une autre caractéristique, le système de suspension comprend au moins un élément de liaison qui s'étend entre des première et deuxième extrémités ainsi qu'au moins une articulation reliant la première ou deuxième extrémité et un élément parmi le mât et la partie arrière du cœur de réacteur, ladite articulation comprenant au moins un axe de pivotement parallèle à l'axe de rotation de la motorisation.

Selon une autre caractéristique, le système de suspension comprend des première et deuxième bielles en série présentant chacune des première et deuxième extrémités ; les premières extrémités des première et deuxième bielles étant reliées entre elles par une première articulation, la deuxième extrémité de la première bielle étant reliée au mât par une deuxième articulation, la deuxième extrémité de la deuxième bielle étant reliée à la partie arrière du cœur de réacteur par une troisième articulation, les première, deuxième et troisième articulations comportant chacune au moins un axe de pivotement parallèle à l'axe de rotation de la motorisation.

Selon une autre caractéristique, la première articulation comprend :
- un cylindre de pivotement,
- une extrémité plate, présentant un orifice traversant configuré pour loger le cylindre de pivotement, solidaire d'une première partie parmi les première et deuxième bielles,
- une chape configurée pour loger l'extrémité plate, présentant des orifices traversants configurés pour loger le cylindre de pivotement, solidaire d'une deuxième partie différente de la première partie parmi les première et deuxième bielles.

Selon une autre caractéristique, la deuxième articulation comprend :
- un cylindre de pivotement,
- une extrémité plate ou une ferrure, présentant un orifice traversant configuré pour loger le cylindre de pivotement, solidaire d'une première partie parmi la première bielle et le mât,
- une chape configurée pour loger l'extrémité plate, présentant des orifices traversants configurés pour loger le cylindre de pivotement, solidaire d'une deuxième partie différente de la première partie parmi la première bielle et le mât.

Selon une autre caractéristique, la troisième articulation comprend :
- un cylindre de pivotement,
- une extrémité plate ou une ferrure, présentant un orifice traversant configuré pour loger le cylindre de pivotement, solidaire d'une première partie parmi la deuxième bielle et la partie arrière du cœur de réacteur,
- une chape configurée pour loger l'extrémité plate, présentant des orifices traversants configurés pour loger le cylindre de pivotement, solidaire d'une deuxième partie différente de la première partie parmi la deuxième bielle et la partie arrière du cœur de réacteur.

Selon une autre caractéristique, le système de suspension comprend :
- un élément souple et déformable qui présente une longueur, un allongement inférieur à 20% de sa longueur et s'étend entre des première et deuxième extrémités,
- une première articulation, reliant la première extrémité et le mât, qui présente un axe de pivotement parallèle à la direction longitudinale,
- une deuxième articulation, reliant la deuxième extrémité et la partie arrière du cœur de réacteur, qui présente un axe de pivotement parallèle à la direction longitudinale.

Selon une autre caractéristique, l'élément souple est un câble.

L'invention a également pour objet un aéronef comportant au moins un ensemble de propulsion selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un aéronef,
- La figure 2 est une coupe longitudinale schématique d'un ensemble de propulsion illustrant un mode de réalisation de l'art antérieur,
- La figure 3 est une coupe longitudinale schématique d'un ensemble de propulsion illustrant un mode de réalisation de l'invention,
- La figure 4 est une vue en perspective d'un système de suspension d'une partie arrière d'un cœur de réacteur illustrant un mode de réalisation de l'invention,
- La figure 5 est une vue de face du système de suspension visible sur la figure 4, en l'absence de défaillance sur la partie (A) et en présence d'une défaillance sur la partie (B), et
- La figure 6 est une vue en perspective d'un système de suspension d'une partie arrière d'un cœur de réacteur illustrant un autre mode de réalisation de l'invention.

Selon un mode de réalisation visible sur la figure 3, un ensemble de propulsion 30 comprend une motorisation 32, une nacelle (non représentée) positionnée autour de la motorisation 32 ainsi qu'un mât 34 configuré pour relier l'ensemble de propulsion 30, et plus particulièrement la motorisation 32, à une voilure 36 d'un aéronef. Ce dernier comprend au moins un tel ensemble de propulsion 30.

La motorisation 32 comprend une soufflante 38 ainsi qu'un cœur de réacteur 40 comprenant une partie avant 40.1, intégrant notamment des étages de compression et des chambres de combustion, ainsi qu'une partie arrière 40.2 intégrant notamment des turbines et une tuyère. Selon un agencement, les parties avant et arrière 40.1, 40.2 sont reliées au niveau d'une zone de jonction 40.3 située entre les chambres de combustion et les turbines.

Selon un mode de réalisation, la partie arrière 40.2 du cœur de réacteur 40 comprend un carter d'échappement qui présente plusieurs cadres structurels décalés les uns par rapport aux autres selon la direction longitudinale.

Le mât 34 comprend une structure primaire 42, sous la forme d'un caisson, qui est reliée à la voilure 36 par une attache-voilure 44.

L'ensemble de propulsion 30 comprend au moins un système d'attache-moteur 46 reliant la structure primaire 42 du mât 34 et la motorisation 32. Selon un agencement, le système d'attache-moteur 46 relie d'une part la structure primaire 42 du mât 34 et, d'autre part, la partie avant 40.1 de la motorisation 32 et éventuellement la soufflante 38.

Le système d'attache-moteur 46 comprend une attache-moteur avant 46.1, une attache-moteur arrière 46.2 ainsi qu'un couple de bielles de poussée 46.3 qui assurent la reprise des efforts de poussée. Plus précisément, les attaches-moteurs avant et arrière 46.1, 46.2 relient la partie avant 40.1 du cœur de réacteur 40 et la structure primaire 42 du mât 34. L'attache-moteur arrière 46.2 et le couple de bielles de poussée 46.3 étant reliée à la structure primaire 42 du mât, au niveau d'une zone médiane de la structure primaire 42 située sensiblement à équidistance des extrémités avant et arrière de la structure primaire 42. Bien entendu, l'invention n'est pas limitée à ce mode de réalisation pour le système d'attache-moteur 46. L'attache-moteur avant 46.1 pourrait être reliée à la soufflante 38. Pour autant qu'il soit selon la revendication 1, le système d'attache-moteur 46 peut comprendre jusqu'à quatre attaches-moteurs.

Quel que soit le mode de réalisation, la motorisation 32 comprend une extrémité avant E1 et une extrémité arrière E2. Le système d'attache-moteur 46 est écarté de l'extrémité arrière E2 de la motorisation 32 et configuré pour assurer la transmission des efforts entre la motorisation 32 et le mât 34, notamment en l'absence de défaillance. La partie arrière 40.2 du cœur de réacteur 40 est décalée vers l'extrémité arrière E2 de la motorisation 32 par rapport au système d'attache-moteur 46, plus particulièrement par rapport à l'attache-moteur arrière 46.2, et s'étend jusqu'à cette extrémité arrière E2.

La motorisation 32, le mât 34 et le système d'attache-moteur 46 ne sont pas plus détaillés car ils pourraient être identiques à ceux de l'art antérieur.

L'ensemble de propulsion 30 comprend un système de suspension 48 reliant le mât 34, plus particulièrement sa structure primaire 42, et la partie arrière 40.2 du cœur de réacteur 40. Si cette partie arrière 40.2 se détache de la partie avant 40.1 en cas de défaillance, elle reste reliée au mât 34 et ne tombe pas.

Le système de suspension 48 est distinct de l'attache moteur arrière 46.2 et situé entre l'attache-moteur arrière 46.2 et l'extrémité arrière E2 de la motorisation 32. Ce système de suspension 48 est configuré pour ne pas assurer la transmission d'efforts entre la motorisation 32 et le mât 34 en l'absence de défaillance et assurer la reprise du poids de la partie arrière 40.2 du cœur de réacteur 40 en cas de défaillance. A cet effet, le système de suspension 48 comprend une première extrémité 48.1 reliée à un premier point d'ancrage P1 solidaire du mât 34 ainsi qu'une deuxième extrémité 48.2 reliée à un deuxième point d'ancrage P2 solidaire de la deuxième partie 40.2 du cœur de réacteur 40, le système de suspension 48 présentant une longueur séparant les première et deuxième extrémités 48.1, 48.2 supérieure à une distance séparant les premier et deuxième points d'ancrage P1, P2. Le premier point d'ancrage P1 est situé à proximité de l'extrémité arrière de la structure primaire 42 du mât 34.

Selon une configuration, le système de suspension 48 est relié à un des cadres structurels du carter d'échappement, notamment celui positionné le plus à l'avant, pour assurer une meilleure reprise des efforts générés lors d'un détachement de la partie arrière 40.2. De manière privilégiée, le système de suspension 48 est décalé vers l'arrière par rapport aux turbines de manière à ne pas être endommagé en cas d'éclatement d'une des turbines.

Selon une configuration, le système de suspension 48 comprend au moins un élément de liaison 50 qui s'étend entre des première et deuxième extrémités 50.1, 50.2 ainsi qu'au moins une articulation 52 reliant, directement ou indirectement, la première ou deuxième extrémité 50.1, 50.2 et un élément parmi le mât 34 et la partie arrière 40.2 du cœur de réacteur 40, ladite articulation 52 comprenant au moins un axe de pivotement A52 parallèle à la direction longitudinale (parallèle à l'axe de rotation de la motorisation A32).

Cette configuration permet à la partie arrière 40.2 du cœur de réacteur 40 de bouger par rapport à la structure primaire 42.

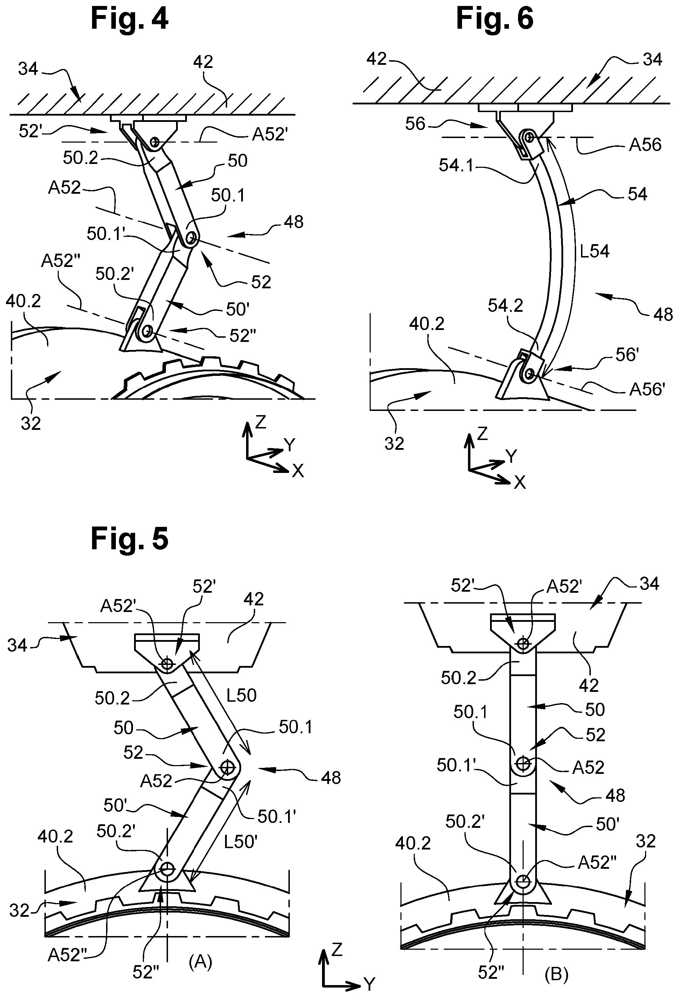

Selon un mode de réalisation visible sur les figures 4 et 5, le système de suspension 48 comprend des première et deuxième bielles 50, 50' en série présentant chacune des première et deuxième extrémités 50.1, 50.2, 50.1', 50.2' ; les premières extrémités 50.1, 50.1' des première et deuxième bielles 50, 50' étant reliées entre elles par une première articulation 52, la deuxième extrémité 50.2 de la première bielle 50 étant reliée au mât 34, plus particulièrement à la structure primaire 42, par une deuxième articulation 52', la deuxième extrémité 50.2' de la deuxième bielle 50' étant reliée à la partie arrière 40.2 du cœur de réacteur 40 par une troisième articulation 52", les première, deuxième et troisième articulations 52, 52', 52" comportant chacune au moins un axe de pivotement A52, A52', A52" parallèle à la direction longitudinale (parallèle à l'axe de la motorisation A32).

Ce mode de réalisation permet d'assurer une liberté de mouvement de la motorisation 32 par rapport au mât 34.

Selon un agencement, pour chacune des première et deuxième bielles 50, 50, un premier élément parmi les première et deuxième extrémités 50.1, 50.2, 50.1', 50.2' comprend une chape comportant deux branches traversées par des orifices traversants coaxiaux. En complément, un deuxième élément différent du premier élément parmi les première et deuxième extrémités 50.1, 50.2, 50.1', 50.2' comprend une extrémité plate, présentant un orifice traversant, configurée pour coopérer avec une chape et être positionnée entre les branches de la chape.

Selon un mode de réalisation, la première articulation 52 comprend un cylindre de pivotement, une extrémité plate, présentant un orifice traversant configuré pour loger le cylindre de pivotement, solidaire d'une première partie parmi les première et deuxième bielles 50, 50' ainsi qu'une chape configurée pour loger l'extrémité plate, présentant des orifices traversants configurés pour loger le cylindre de pivotement, solidaire d'une deuxième partie différente de la première partie parmi les première et deuxième bielles 50, 50'.

La deuxième articulation 52' comprend un cylindre de pivotement, une extrémité plate ou une ferrure, présentant un orifice traversant configuré pour loger le cylindre de pivotement, solidaire d'une première partie parmi la première bielle 50 et le mât 34 (plus particulièrement sa structure primaire 42) ainsi qu'une chape configurée pour loger l'extrémité plate, présentant des orifices traversants configurés pour loger le cylindre de pivotement, solidaire d'une deuxième partie différente de la première partie parmi la première bielle 50 et le mât 34 (plus particulièrement sa structure primaire 42).

La troisième articulation 52" comprend un cylindre de pivotement, une extrémité plate ou une ferrure, présentant un orifice traversant configuré pour loger le cylindre de pivotement, solidaire d'une première partie parmi la deuxième bielle 50' et la partie arrière 40.2 du cœur de réacteur 40 ainsi qu'une chape configurée pour loger l'extrémité plate, présentant des orifices traversants configurés pour loger le cylindre de pivotement, solidaire d'une deuxième partie différente de la première partie parmi la deuxième bielle 50' et la partie arrière 40.2 du cœur de réacteur 40.

Selon un agencement, les première et deuxième bielles 50, 50' sont dimensionnées de sorte à ne pas être alignées et former un angle inférieur à 180° en conditions normales et en l'absence de défaillance, comme illustré sur la partie (A) de la figure 5. Selon cet agencement, les première et deuxième bielles présentent des première et deuxième longueurs L50, L50' (distance séparant l'axe de pivotement A52 de la première articulation 52 et l'axe de pivotement A52', A52" de la deuxième ou troisième articulation 52', 52"). La somme des première et deuxième longueurs L50, L50' est supérieure à la distance directe (en ligne droite) séparant les axes de pivotement A52', A52" des deuxième et troisième articulations 52', 52". Les première et deuxième bielles 50, 50' peuvent être métalliques, en matériau composite ou hybrides (métalliques et en matériau composite).

Selon un deuxième mode de réalisation, le système de suspension 48 comprend un élément souple 54 et déformable qui s'étend entre des première et deuxième extrémités 54.1, 54.2 et présente une longueur ainsi qu'un allongement inférieur 20% de la longueur. Une première articulation 56 relie la première extrémité 54.1 et le mât 34 et présente un axe de pivotement A56 parallèle à la direction longitudinale. Une deuxième articulation 56' relie la deuxième extrémité 54.2 et la partie arrière 40.2 du cœur de réacteur 40 et présente un axe de pivotement A56' parallèle à la direction longitudinale. L'élément souple 54 est un câble métallique, en matériau composite ou hybride. Il présente une longueur L54, distance séparant les axes de pivotement A56, A56' des première et deuxième articulations 56, 56' supérieure à la distance directe (en ligne droite) séparant les axes de pivotement A56, A56' des première et deuxième articulations 56, 56'.

Selon une configuration, chacune des première et deuxième extrémités de l'élément souple 54 comprend une chape. En complément, la partie arrière 40.2 du cœur de réacteur 40 et la structure primaire 42 du mât 34 comprennent chacune une ferrure configurée pour coopérer avec la chape de la première ou deuxième extrémité 54.1, 54.2 de l'élément souple 54.

Bien entendu, l'invention n'est pas limitée à ces modes de réalisation pour le système de suspension 48.

## Revendications

1. Ensemble de propulsion comprenant une motorisation (32) qui présente un axe de rotation de motorisation (A32), une nacelle positionnée autour de la motorisation (32), un mât (34) ainsi qu'un système d'attache-moteur (46, 46.1, 46.2) reliant la motorisation (32) et le mât (34), la motorisation (32) s'étendant entre des extrémités avant et arrière (E1, E2) et comportant une soufflante (38) ainsi qu'un cœur de réacteur (40) qui comprend des parties avant et arrière (40.1, 40.2), le système d'attache-moteur (46) comprenant une attache-moteur avant (46.1), une attache-moteur arrière (46.2) ainsi qu'un couple de bielles de poussée (46.3) qui assurent la reprise des efforts de poussée, la partie arrière (40.2) du cœur de réacteur (40) étant décalée vers l'extrémité arrière (E2) de la motorisation (32) par rapport à l'attache-moteur arrière (46.2) et s'étendant jusqu'à cette extrémité arrière (E2) ; l'ensemble de propulsion (30) comprenant un système de suspension (48) reliant le mât (34) et la partie arrière (40.2) du cœur de réacteur (40), situé entre l'attache-moteur arrière (46.2) et l'extrémité arrière (E2) de la motorisation (32) ; le système de suspension (48) comprenant une première extrémité (48.1) reliée à un premier point d'ancrage (P1) solidaire du mât (34) ainsi qu'une deuxième extrémité (48.2) reliée à un deuxième point d'ancrage (P2) solidaire de la partie arrière (40.2) du cœur de réacteur (40), **caractérisé en ce que** le système de suspension (48) présente une longueur séparant les première et deuxième extrémités (48.1, 48.2) supérieure à une distance séparant les premier et deuxième points d'ancrage (P1, P2) et est configuré pour ne pas assurer la transmission d'efforts entre la motorisation (32) et le mât (34) en l'absence de défaillance et assurer la reprise du poids de la partie arrière (40.2) du cœur de réacteur (40) en cas de défaillance.

2. Ensemble de propulsion selon la revendication précédente, **caractérisé en ce que** la partie arrière (40.2) du cœur de réacteur (40) comprend un carter d'échappement qui présente plusieurs cadres structurels décalés les uns par rapport aux autres selon une direction parallèle à l'axe de rotation de la motorisation (A32) et **en ce que** le système de suspension (48) est relié à un des cadres structurels du carter d'échappement.

3. Ensemble de propulsion selon l'une des revendications précédentes, **caractérisé en ce que** le système de suspension (48) comprend au moins un élément de liaison (50) qui s'étend entre des première et deuxième extrémités (50.1, 50.2) ainsi qu'au moins une articulation (52) reliant la première ou deuxième extrémité (50.1, 50.2) et un élément parmi le mât (34) et la partie arrière (40.2) du cœur de réacteur (40), ladite articulation (52) comprenant au moins un axe de pivotement (A52) parallèle à l'axe de rotation de la motorisation (A32).

4. Ensemble de propulsion selon la revendication précédente, **caractérisé en ce que** le système de suspension (48) comprend des première et deuxième bielles (50, 50') en série présentant chacune des première et deuxième extrémités (50.1, 50.2, 50.1', 50.2') ; les premières extrémités (50.1, 50.1') des première et deuxième bielles (50, 50') étant reliées entre elles par une première articulation (52), la deuxième extrémité (50.2) de la première bielle (50) étant reliée au mât (34) par une deuxième articulation (52'), la deuxième extrémité (50.2') de la deuxième bielle (50') étant reliée à la partie arrière (40.2) du cœur de réacteur (40) par une troisième articulation (52"), les première, deuxième et troisième articulations (52, 52', 52") comportant chacune au moins un axe de pivotement (A52, A52', A52") parallèle à l'axe de rotation de la motorisation (A32).

5. Ensemble de propulsion selon la revendication précédente, **caractérisé en ce que** la première articulation (52) comprend :
- un cylindre de pivotement,
- une extrémité plate, présentant un orifice traversant configuré pour loger le cylindre de pivotement, solidaire d'une première partie parmi les première et deuxième bielles (50, 50'),
- une chape configurée pour loger l'extrémité plate, présentant des orifices traversants configurés pour loger le cylindre de pivotement, solidaire d'une deuxième partie différente de la première partie parmi les première et deuxième bielles (50, 50').

6. Ensemble de propulsion selon l'une des revendications 4 à 5, **caractérisé en ce que** la deuxième articulation (52') comprend :
- un cylindre de pivotement,
- une extrémité plate ou une ferrure, présentant un orifice traversant configuré pour loger le cylindre de pivotement, solidaire d'une première partie parmi la première bielle (50) et le mât (34),
- une chape configurée pour loger l'extrémité plate, présentant des orifices traversants configurés pour loger le cylindre de pivotement, solidaire d'une deuxième partie différente de la première partie parmi la première bielle (50) et le mât (34).

7. Ensemble de propulsion selon l'une des revendications 4 à 6, **caractérisé en ce que** la troisième articulation (52") comprend :
- un cylindre de pivotement,
- une extrémité plate ou une ferrure, présentant un orifice traversant configuré pour loger le cylindre de pivotement, solidaire d'une première partie parmi la deuxième bielle (50') et la partie arrière (40.2) du cœur de réacteur (40),
- une chape configurée pour loger l'extrémité plate, présentant des orifices traversants configurés pour loger le cylindre de pivotement, solidaire d'une deuxième partie différente de la première partie parmi la deuxième bielle (50') et la partie arrière (40.2) du cœur de réacteur (40).

8. Ensemble de propulsion selon la revendication 3, **caractérisé en ce que** le système de suspension (48) comprend :
- un élément souple (54) et déformable qui présente une longueur, un allongement inférieur à 20% de la longueur et s'étend entre des première et deuxième extrémités (54.1, 54.2),
- une première articulation (56), reliant la première extrémité (54.1) et le mât (34), qui présente un axe de pivotement (A56) parallèle à la direction longitudinale,
- une deuxième articulation (56'), reliant la deuxième extrémité (54.2) et la partie arrière (40.2) du cœur de réacteur (40), qui présente un axe de pivotement (A56') parallèle à la direction longitudinale.

9. Ensemble de propulsion selon la revendication précédente, **caractérisé en ce que** l'élément souple (54) est un câble.

10. Aéronef comportant au moins un ensemble de propulsion selon l'une des revendications précédentes.

## Patentansprüche

1. Antriebseinheit mit einer Motorisierung (32), die eine Drehachse der Motorisierung (A32) aufweist, eine um die Motorisierung (32) angeordnete Gondel, einen Mast (34) sowie eine Motorbefestigung (46, 46.1, 46.2), die die Motorisierung (32) und den Mast (34) verbindet, wobei sich die Motorisierung (32) zwischen einem vorderen und einem hinteren Ende (E1, E2) erstreckt und eine Gebläse (38) sowie einen Triebwerkskern (40) aufweist, der einen vorderen und einen hinteren Teil (40.1, 40.2) aufweist, wobei das System der Motorbefestigung (46) eine vordere Motorbefestigung (46.1), eine hintere Motorbefestigung (46.2) sowie ein Paar Schubstangen (46.3) aufweist, die die Aufnahme der Schubkräfte gewährleisten, wobei der hintere Teil (40.2) des Triebwerkskerns (40) gegenüber der hinteren Motorbefestigung (46.2) zum hinteren Ende (E2) der Motorisierung (32) hin versetzt ist und sich bis zu diesem hinteren Ende (E2) erstreckt, wobei die Antriebseinheit (30) ein Aufhängsystem (48) aufweist, das den Mast (34) und den hinteren Teil (40.2) des Triebwerkskerns (40) verbindet und sich zwischen der hinteren Motorbefestigung (46.2) und dem hinteren Ende (E2) der Motorisierung (32) befindet, und wobei das Aufhängsystem (48) ein erstes Ende (48.1), das mit einem ersten, fest an dem Mast (34) angebrachten Verankerungspunkt (P1) verbunden ist, sowie ein zweites Ende (48.2) aufweist, das mit einem zweiten, fest an dem hinteren Teil (40.2) des Triebwerkskerns (40) angebrachten Verankerungspunkt (P2) verbunden ist, **dadurch gekennzeichnet, dass** das Aufhängsystem (48) eine Länge zwischen dem ersten und dem zweiten Ende (48.1, 48.2) aufweist, die größer ist als der Abstand zwischen dem ersten und dem zweiten Verankerungspunkt (P1, P2) und dazu eingerichtet ist, keine Kraftübertragung zwischen der Motorisierung (32) und dem Mast (34) im Normalbetrieb zu gewährleisten und im Störfall das Gewicht des hinteren Teils (40.2) des Triebwerkskerns (40) aufzunehmen.

2. Antriebseinheit nach dem vorstehenden Anspruch, **dadurch gekennzeichnet, dass** der hintere Teil (40.2) des Triebwerkskerns (40) ein Abgasgehäuse aufweist, das mehrere Strukturrahmen aufweist, die untereinander in eine zur Drehachse der Motorisierung (A32) parallele Richtung versetzt sind, und dass das Aufhängsystem (48) mit einem der Strukturrahmen des Abgasgehäuses verbunden ist.

3. Antriebseinheit nach einem der vorstehenden Ansprüche, **dadurch gekennzeichnet, dass** das Aufhängsystem (48) wenigstens ein Verbindungselement (50) aufweist, das sich zwischen einem ersten und einem zweiten Ende (50.1, 50.2) erstreckt, sowie wenigstens ein Gelenk (52), das das erste oder zweite Ende (50.1, 50.2) und entweder den Mast (34) oder den hinteren Teil (40.2) des Triebwerkskerns (40) verbindet, wobei das Gelenk (52) wenigstens eine zur Drehachse der Motorisierung (A32) parallele Schwenkachse (A52) aufweist.

4. Antriebseinheit nach dem vorstehenden Anspruch, **dadurch gekennzeichnet, dass** das Aufhängsystem (48) eine erste und eine zweite in Reihe angeordnete Stange (50, 50') aufweist, die jeweils ein erstes und ein zweites Ende (50.1, 50.2, 50.1', 50.2') aufweisen, wobei die ersten Enden (50.1, 50.1') der ersten und zweiten Stangen (50, 50') über ein erstes Gelenk (52) miteinander verbunden sind, das zweite Ende (50.2) der ersten Stange (50) über ein zweites Gelenk (52') mit dem Mast (34) verbunden ist, wobei das zweite Ende (50.2') der zweiten Stange (50') über ein drittes Gelenk (52") mit dem hinteren Teil (40.2) des Triebwerkskerns (40) verbunden ist, und wobei das erste, zweite und dritte Gelenk (52, 52', 52") jeweils wenigstens eine zur Drehachse der Motorisierung (A32) parallele Schwenkachse (A52, A52', A52") aufweisen.

5. Antriebseinheit nach dem vorstehenden Anspruch, **dadurch gekennzeichnet, dass** das erste Gelenk (52) umfasst:
- einen Schwenkzylinder,
- einen flachen Endabschnitt, der eine Durchgangsöffnung aufweist, die dazu eingerichtet ist, den Schwenkzylinder aufzunehmen, und der an einem ersten Teil aus der ersten und der zweiten Stange (50, 50') angebracht ist,
- eine Gabel, die zur Aufnahme des flachen Endabschnitts eingerichtet ist, die Durchgangsöffnungen aufweist, die dazu eingerichtet sind, den Schwenkzylinder aufzunehmen, und die an einem zweiten Teil angebracht ist, der sich von dem ersten Teil aus der ersten und der zweiten Stange (50, 50') unterscheidet.

6. Antriebseinheit nach einem der Ansprüche 4 bis 5, **dadurch gekennzeichnet, dass** das zweite Gelenk (52') umfasst:
- einen Schwenkzylinder,
- einen flachen Endabschnitt oder einen Beschlag, der eine Durchgangsöffnung aufweist, die dazu eingerichtet ist, den Schwenkzylinder aufzunehmen, und der an einem ersten Teil aus der ersten Stange (50) und dem Mast (34) angebracht ist,
- eine Gabel, die zur Aufnahme des flachen Endabschnitts eingerichtet ist, und die Durchgangsöffnungen aufweist, die dazu eingerichtet sind, den Schwenkzylinder aufzunehmen, und die an einem zweiten Teil angebracht ist, der sich von dem ersten Teil aus der ersten Stange (50) und dem Mast (34) unterscheidet.

7. Antriebseinheit nach einem der Ansprüche 4 bis 6, **dadurch gekennzeichnet, dass** das dritte Gelenk (52") umfasst:
- einen Schwenkzylinder,
- einen flachen Endabschnitt oder einen Beschlag, der eine Durchgangsbohrung aufweist, die dazu eingerichtet ist, den Schwenkzylinder aufzunehmen, und der an einem ersten Teil aus der zweiten Stange (50') und dem hinteren Teil (40.2) des Triebwerkskerns (40) angebracht ist,
- eine Gabel, die zur Aufnahme des flachen Endabschnitts eingerichtet ist, die Durchgangsöffnungen aufweist, die dazu eingerichtet sind, den Schwenkzylinder aufzunehmen, und die an dem zweiten Teil angebracht ist, der sich von dem ersten Teil aus der zweiten Stange (50') und dem hinteren Teil (40.2) des Triebwerkskerns (40) unterscheidet.

8. Antriebseinheit nach Anspruch 3, **dadurch gekennzeichnet, dass** das Aufhängsystem (48) umfasst:
- ein flexibles und verformbares Element (54), das eine Länge und eine Dehnung von weniger als 20 % der Länge aufweist und sich zwischen einem ersten und einem zweiten Ende (54.1, 54.2) erstreckt,
- ein erstes Gelenk (56), das das erste Ende (54.1) mit dem Mast (34) verbindet und eine zur Längsrichtung parallele Schwenkachse (A56) aufweist,
- ein zweites Gelenk (56'), das das zweite Ende (54.2) mit dem hinteren Teil (40.2) des Triebwerkskerns (40) verbindet und eine zur Längsrichtung parallele Schwenkachse (A56') aufweist.

9. Antriebseinheit nach dem vorstehenden Anspruch, **dadurch gekennzeichnet, dass** das flexible Element (54) ein Seil ist.

10. Luftfahrzeug, das wenigstens eine Antriebseinheit gemäß einem der vorstehenden Ansprüche aufweist.

## Claims

1. Propulsion unit comprising an engine (32) which has an engine axis of rotation (A32), a nacelle positioned about the engine (32), a pylon (34), in addition to an engine mount system (46, 46.1, 46.2) which connects the engine (32) and the pylon (34), the engine (32) extending between the front and rear ends (E1, E2) and comprising a fan (38), in addition to a jet engine core (40) which comprises front and rear parts (40.1, 40.2), the engine mount system (46) comprising a front engine mount (46.1), a rear engine mount (46.2), in addition to a pair of thrust rods (46.3) which ensure the take-up of thrust forces, and the rear part (40.2) of the jet engine core (40) being offset toward the rear end (E2) of the engine (32) relative to the rear engine mount (46.2) and extending as far as this rear end (E2); the propulsion unit (30) comprising a suspension system (48) which connects the pylon (34) and the rear part (40.2) of the jet engine core (40) and which is located between the rear engine mount (46.2) and the rear end (E2) of the engine (32); the suspension system (48) comprising a first end (48.1) which is connected to a first anchoring point (P1) fixed to the pylon (34) and a second end (48.2) which is connected to a second anchoring point (P2) fixed to the rear part (40.2) of the jet engine core (40), **characterized in that** the suspension system (48) comprises a length, separating the first and second ends (48.1, 48.2), which is greater than a distance separating the first and second anchoring points (P1, P2) and is configured so as not to transmit forces between the engine (32) and the pylon (34) in the absence of a failure, and to support the weight of the rear part (40.2) of the jet engine core (40) in the event of a failure.

2. Propulsion unit as claimed in the preceding claim, wherein the rear part (40.2) of the jet engine core (40) comprises an exhaust casing which has a plurality of structural frames which are offset relative to one another in a direction parallel to the axis of rotation of the engine (A32) and wherein the suspension system (48) is connected to one of the structural frames of the exhaust casing.

3. Propulsion unit as claimed in one of the preceding claims, wherein the suspension system (48) comprises at least one connecting element (50) which extends between the first and second ends (50.1, 50.2), in addition to at least one joint (52) which connects the first or second end (50.1, 50.2) and an element from amongst the pylon (34) and the rear part (40.2) of the jet engine core (40), said joint (52) comprising at least one pivot axis (A52) parallel to the axis of rotation of the engine (A32).

4. Propulsion unit as claimed in the preceding claim, wherein the suspension system (48) comprises first and second links (50, 50') in series, each having first and second ends (50.1, 50.2, 50.1', 50.2'); the first ends (50.1, 50.1') of the first and second links (50, 50') being connected to one another by a first joint (52), the second end (50.2) of the first link (50) being connected to the pylon (34) by a second joint (52'), the second end (50.2') of the second link (50') being connected to the rear part (40.2) of the jet engine core (40) by a third joint (52"), and the first, second and third joints (52, 52', 52") each comprising at least one pivot axis (A52, A52', A52") parallel to the axis of rotation of the engine (A32).

5. Propulsion unit as claimed in the preceding claim, wherein the first joint (52) comprises:
- a swivel cylinder,
- a flat end, having a through-orifice which is configured to house the swivel cylinder, fixed to a first part from amongst the first and second links (50, 50')
- a clevis which is configured to house the flat end, having through-orifices which are configured to house the swivel cylinder, fixed to a second part which is different from the first part from amongst the first and second links (50, 50').

6. Propulsion unit as claimed in one of claims 4 to 5, wherein the second joint (52') comprises :
- a swivel cylinder,
- a flat end or a bracket, having a through-orifice which is configured to house the swivel cylinder, fixed to a first part from amongst the first link (50) and the pylon (34),
- a clevis which is configured to house the flat end, having through-orifices which are configured to house the swivel cylinder, fixed to a second part which is different from the first part from amongst the first link (50) and the pylon (34).

7. Propulsion unit as claimed in one of claims 4 to 6, wherein the third joint (52") comprises :
- a swivel cylinder,
- a flat end or a bracket, having a through-orifice which is configured to house the swivel cylinder, fixed to a first part from amongst the second link (50') and the rear part (40.2) of the jet engine core (40),
- a clevis which is configured to house the flat end, having through-orifices which are configured to house the swivel cylinder, fixed to a second part which is different from the first part from amongst the second link (50') and the rear part (40.2) of the jet engine core (40).

8. Propulsion unit as claimed in claim 3, wherein the suspension system (48) comprises :
- a flexible and deformable element (54) which has a length, an elongation which is less than 20% of the length and extends between the first and second ends (54.1, 54.2),
- a first joint (56) which connects the first end (54.1) and the pylon (34) and which has a pivot axis (A56) parallel to the longitudinal direction,
- a second joint (56') which connects the second end (54.2) and the rear part (40.2) of the jet engine core (40) and which has a pivot axis (A56') parallel to the longitudinal direction.

9. Propulsion unit as claimed in the preceding claim, wherein the flexible element (54) is a cable.

10. Aircraft comprising at least one propulsion unit as claimed in one of the
preceding claims.
